# EUROPEAN PATENT SPECIFICATION

(11) **EP 1 031 266 B1**
(45) Date of publication and mention of the grant of the patent: **31.07.2002**
(21) Application number: 00103434.7
(22) Date of filing: 25.02.2000
(51) Int. Cl.: A01C 7/04

(54) **Seed delivery device for a single-seed drill**
Vorrichtung zur Abgabe von Samen in einer Einzelkomsämaschine
Appareil pour la distribution de graines dans un semoir monograine

(30) Priority: 26.02.1999 IT BO990085
(43) Date of publication of application: 30.08.2000
(73) Proprietor: GHEON S.r.l., 48020 S. Pancrazio di Russi (Ravenna) (IT)
(72) Inventor: Turchetto, Alfredo, 33080 Roveredo in Piano (Pordenone) (IT)
(74) Representative: Dall'Olio, Giancarlo

(56) References cited:
- DE-A- 2 011 462
- US-A- 3 990 606
- US-A- 4 949 869
- US-A- 5 848 571

## Description

The present invention relates to the construction of agricultural equipment, in particular pneumatic single-seed drill.

It is known that machines known as seed drills are used for sowing seeds. Basically, these machines include each one a colter, aimed at scraping the ground clear of e.g. pebbles and stones, tracking means for making a track in which the seeds are to be placed, a seed delivery device fed by a seed hopper containing a certain amount of seeds.

The seed delivery mechanism has the task of placing the seeds in the track made in the ground. Then, a pair of seed covering discs turn the ground on the seeds while closing the track. Lastly, there is at least one press wheel aimed at pressing slightly the ground over the seeds.

The seed delivery device is the most relevant part of this piece of equipment. This device basically includes a cover with two tubes connected thereto. A seed tube leads the seeds from the seed hopper into the cover and a delivery tube receives and leads the seeds while they are falling from the seed drill to the track made in the ground.

The cover matches with a second part, which includes a bell-like holder. Between the cover and the bell-like holder there is located a movable part including a sorter disc.

The sorter disc has through holes made at regular distances along a circumference thereof.

The disc is driven by known means and is situated in touch with the bell-like holder.

A pipe originates from the bell-like holder and is connected with suction means.

The bell-like holder has a hub on which there is fixed a pad set in touch with a corresponding section of the face of the disc turned to the bell-like holder, in such a way as to close a preset number of the above mentioned through holes.

Pressing springs acts on the pad according to a predetermined thrust, so as to push it against the surface of the sorter disc.

When the seed drill is in operation, a vacuum condition is created in the region delimited between the sorter disc and the bell-like holder.

Due to this vacuum condition, the seeds conveyed by the seed tube strike a sorter plate (this plate having a serrated profile and being pressed against the sorter disc by related springs) and are moved towards the holes made in the sorter disc. Then, the seeds remain attached to the disc in the regions of the holes due to the action of the vacuum, and are therefore transported in the same rotation direction of the sorter disc.

During rotation, the holes which happen to be near to the delivery tube are closed by the pad, thus making the seeds contained therein fall down into the delivery tube, because the pad locally breaks the action of the vacuum.

The thrust action of the sorter plate on the sorter disc, as well as of the pad on the sorter disc, is created by the elastic reaction of the springs, and is of course affected by the integrity status of the these springs.

The integrity can be compromised by dynamic stress deriving from the use of the seed drill. Also the thrust entity can hardly be maintained because of the spring stress aging.

Another drawback derives from the fact that the seed cannot be released in a theoretical release point, because other external events may change conditions and actual locations of the components used to define the path of the seeds.

Yet a further drawback that is encountered with the known seed drills, derives from the fact from the fact that an airtight contact between the sorter disc and the bell-like holder is not ensured.

This last problem can be caused by a non correct thrust of the pad, under the action of the springs, on the sorter disc. In fact, in case the springs are no longer well balanced, a force can be generated higher than the one requested to press the pad/s against the sorter disc.

This could provoke a slight detachment of the sorter disc with a consequent change of the vacuum condition inside the bell-like holder and thus a change of the attraction force by which the seed are kept in the related holes.

Document US-A-3,990,606 discloses a single seed drilling machine of the kind described above, wherein the sorter plate is held against the outside of the perforated disc by the action of the machine cover, when this latter is closed. This also leads to some drawbacks in working, as a correct sorting plate position strongly depends on the manufacturing tolerances of the same sorting plate and of the cover and its locking parts.

The object of the invention is that of proposing a seed delivery device capable of keep the catch-on thrust of the sorter plate on the sorter disc.

Another object of the invention is that of providing a seed delivery device in which the seeds are released in a point that is considered as the best for fixing a pitch in the falling sequence of the seed exiting the seed delivery tube.

A further object of the invention is that of proposing a seed delivery device in which the wearing in the contact regions is limited at the minimum.

A further object of the invention is that of proposing a seed delivery device which includes a diverse system for obtaining the airtight sealing between the sorter disc and the bell-like holder.

These objects are obtained, in accordance with the content of the claims.

The characteristic features of the present invention are pointed out in the following description, with reference to the enclosed drawings, in which:
- Figure 1 is a front view of the cover of the seed delivery device;
- Figure 2 is a front view of the sorter disc with working means associated therewith;
- Figure 3 is a section view of the seed delivery device taken along the line III-III in Figure 2;
- Figure 4 is an inside view of the cover of the proposed device;
- Figure 5 is a front view of the part of the working means which carries a series of covering pads;
- Figure 6 is a sectional enlarged view taken along the line VI-VI in Figure 5;
- Figure 7 is a sectional view enlarged as Figure 6 and taken along the line VII-VII in Figure 5;
- Figure 8 is a sectional view taken along the line VIII-VIII in Figure 5.

With reference to the above described drawings, the reference numeral 400 indicates the seed delivery device.

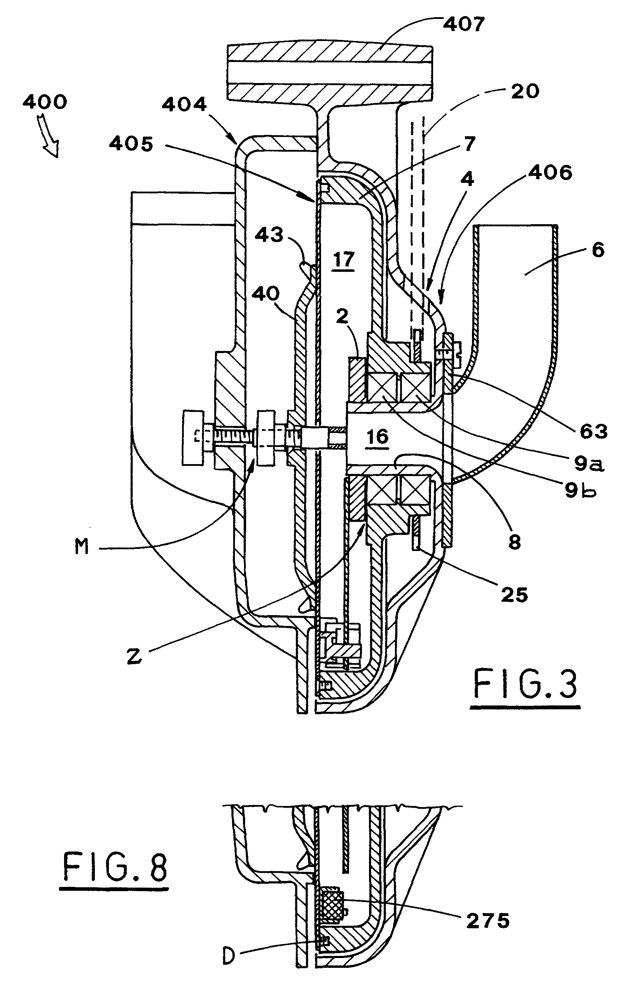

As it is shown in Figure 3, this device includes a bell-like holder 406 whose upper part features a sleeve 407 for fastening the device 400 to the seed drill. The whole seed drill has not been shown in the drawings.

The bell-like holder features a hub 8, which delimits a central hollow 16.

A plate 63 is fastened to the outer facing of the bell-like holder, in the region of the hub 8.

From the plate 63 originates a suction pipe 6, which communicates with the central hollow 16.

A slot 4 is made in the bell-like holder, over the hub 8. A chain 20 passes through the slot 4.

The bell-like holder 406 has also a drum 7 mounted on the hub 8 by means of bearings 9a, 9b. A crown wheel 25 is keyed onto a central protruding part of the drum 7 and engages with the chain 20.

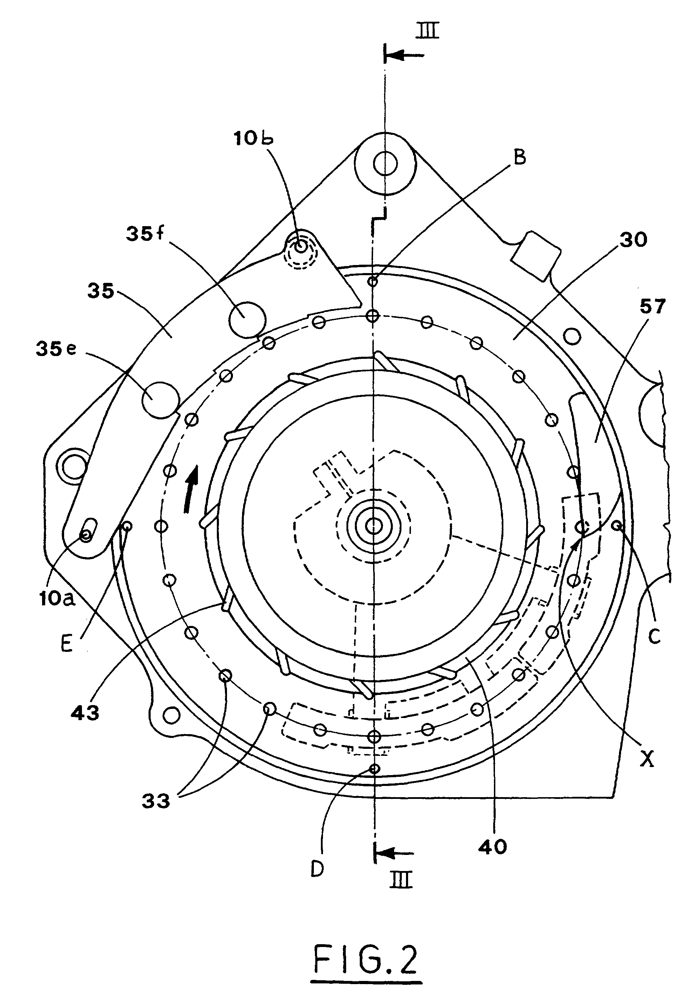

A sorter disc 30 is fastened to an open side of the drum 7, opposite to the protruding part, by known fastening means located in the points B, C, D, E (Figure 2).

The sorter disc 30 has through holes made at regular distances along a concentric circumference.

A disc-like stirrer 40 is fastened to the sorter disc 30 in known way, e.g. by means generically indicated with M. The stirrer 40 is in coaxial relation with the sorter disc 30 and located beside it, on the side opposite the drum (Figure 3).

The disc-like stirrer 40 is equipped with fins 43, situated in its outmost part and inclined by 45° with respect to related radial planes.

A seal Z and a clamp 2 are mounted on the hub 8, beside the central part of the drum 7, in the cavity 17 delimited between the drum and the sorter disc.

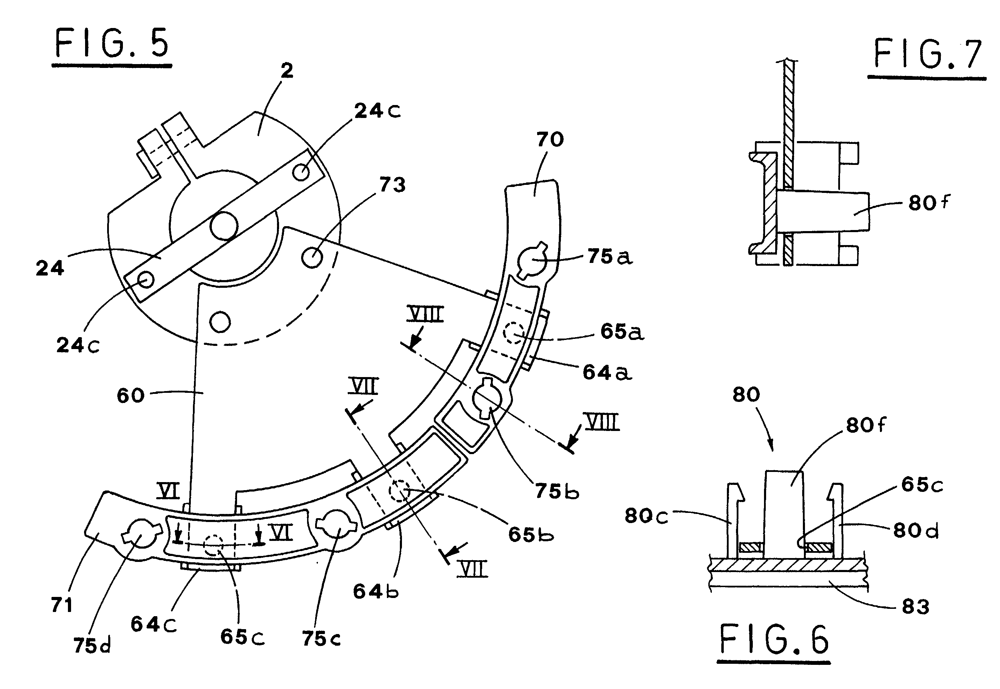

A sector 60 is fastened to the clamp 2 by known fastening means 73 (see Figure 5).

The terminal part of the sector 60 forms three prongs 64a, 64b, 64c, each of which features a hole 65a, 65b, 65c, first, second and third, respectively, made in the central part thereof.

A first pad 70 and a second pad 71, both substantially semicircular, but of different length, are joined to the sector 60 by means of the holes 65. More precisely, the first pad 70 is fixed using the first hole 65a, while the second pad 71 is fixed using the second and third holes 65b, 65c.

The first pad 70 includes a base 83 with two removal-preventing barb-like wings 80c, 80d, and a stake 80f.

The stake 80f is freely introduced into the hole 65a, which remains situated an locked between the two wings 80c, 80d (the wings 80c, 80d together with the stake 80f form a locking element 80 for the pads).

The first pad 70 includes also two seats 75a,75b, which house related magnetic means 275, e.g. permanent magnets (see Figure 8).

The second pad 71, longer than the first pad, includes a base, which features two locking elements 80, fastened in the holes 65b, 65c, alternating with two seats 75c, 75d housing relative magnetic means, similar to the above described ones.

The clamp 2 and the sector 60 are fastened by a cross-bar 24, (fastened by screw means 24c), whose central part features a seat 24, which engages with above mentioned fastening means M.

A curved sorting plate 35 is removably hinged to the edge of the bell-like holder 406, pivoted thereto in 10a, 10b.

The sorting plate 35 has a saw-like profile turned toward the axis of the sorter disc. The sorting plate is kept against the sorter disc due to the action of magnetic means, e.g. two magnets 35e, 35f (see Figure 2).

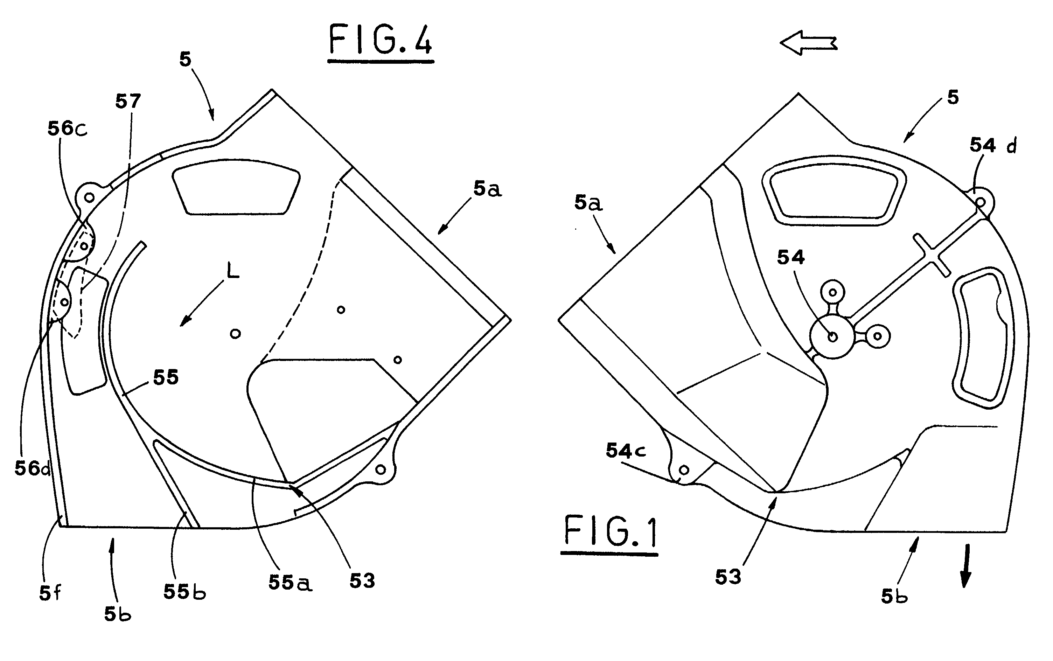

As shown in Figure 3 and in Figure 1, a cover 404 closes the open side of the bell-like holder 406.

The cover 404 has a central hole 54, which receives the fastening means M. The cover features two small ears 54c, 54d, used to fasten the cover to the bell-like holder 406.

Moreover, the cover features two channels made therein, a seeds inlet channel 5a and seeds outlet channel 5b.

Inside, on the left, the cover 5 features a wall 55, which has the shape of a turned up Y.

A first part 55a of the wall 55 follows the lower part 53 of the inlet channel, thus delimiting an "L"-area, in which the seeds are caught.

A second part 55b of the wall 55, together with a related wall 5f, delimits the outlet channel 5b.

In its left side part, shown in Figure 4, the cover 404 features two ears 56c, 56d, to which a platelet striker 57 is fastened.

The striker 57 is e.g. almost triangular and is positioned upstream of the first pad 70, downstream of the sorting plate 35, and beside the sorter disc 30.

It is to be pointed out that suction means of known type are connected to the suction pipe 6, so as to create a vacuum condition inside the cavity of the bell-like holder 406

The chain 20 is connected to driving means mounted on the seed drill.

The suction means and the driving means are not shown, as well known in the art.

The formed seed delivery device 400, formed as described heretofore, has the task of receiving the seeds in the inlet channel 5a and of defining the pace with which the seeds are to be conveyed to the outlet channel 5b.

In order to make possible this action during operation of the seed drill, the suction means create a vacuum condition inside the cavity 17 of the bell-like holder 406 by means of the suction pipe 6.

Meanwhile, the driving means drive the drum 7, the sorter disc 30 and the stirrer 40 into rotation.

The seeds introduced into the delivery device through the inlet channel 5a, are stirred continuously inside the cavity of the cover 404 by the stirrer 40, which rotates together with the sorter disc.

While the seeds are being stirred, the sorting plate 35, by means of the saw-like profile, catches the seeds and leads them, one by one, to corresponding holes 33.

Due to the vacuum created in the cavity 17, the seeds remain attached to the holes and are dragged by the sorter disc during the rotation thereof.

The platelet striker 57 is situated diametrically opposite. to the sorting plate 35, and strikes each single seed thus creating a condition of unstable equilibrium for the seed at the point X.

The pads, made adhere to the sorter disc 30 by the attractive force of the relative magnetic means, define an area, in which the vacuum condition is interrupted, thus making it easier for the seed to fall in the outlet channel 5b, since the closing of some consecutive holes 33 interrupts the suction action, which the collecting pipe 6 creates in order to keep the seed touching the rim of the corresponding hole.

One of the advantages of the above described seed delivery device 400 is that it allows to eliminate the friction between the sorter disc and what in prior art is known as the bell-like holder, thus eliminating the material wear of the two touching zones.

The proposed device is more reliable with respect to the known devices because the introduction of the seal Z between the drum 7 and the clamp 2 moves the sealing area thus reducing the friction surface and the peripheral speed.

The stirrer 40 formed by the tabs inclined by 45 degrees facilitates the stirring of the seeds in the cover cavity, which avoids bouncing of the seeds back to the cavity upper part.

The locking of the sorting plate and of the pads by magnetically attracting means is another advantage, which derives from the fact that the magnetic means guarantee a constant attractive force of the sorter disc, which is impossible with the elastic force given by springs.

The first pad 70 is shorter than the second one and therefore adheres better to the sorter disc, thus guaranteeing best closing of the holes 33 and complete separation of the bell-like holder from the area in which the seeds fall.

The second, longer pad 71adheres less to the sorter disc, but guarantees the complete separation of the outlet channel 5b, thus preventing the creation of powder vortexes therein.

While in traditional systems the seed falling is located near the ground, the introduction of the striker 57 determines a different preset point in which the seeds fall.

In fact, due to the striker 57, the falling point of each seed is moved to an area defined by the strike point X in the region of an horizontal diameter of the sorter disc.

In this case, the seeds are divided equally and dispensed uniformly. This derives from the fact that the striker can intercept the irregular seed in two different positions, namely over or under the point X.

This causes a minimum variation of the angle of incidence with respect to the ground (minimum falling error) since variations occur along an almost vertical direction.

If the shutter were positioned as in prior art, i.e. near the part close to the ground, that means near the fixing point D (Figure 2), the seed strike error would increase during the falling, since the interception variation would be moved along a horizontal axis, causing a bigger variation of the angle of incidence with respect to the ground.

## Claims

1. Seed delivering device for a single-seed drill, of the type comprising:
a bell-like holder (406) fastened to the seed drill and featuring, in a central region, a hollow hub connected to a suction pipe (6) kept in negative pressure condition, and supporting a drum (7) rotatably mounted and driven into a rotation direction;
a cover (404) for closing the bell-like holder, said cover featuring a seed inlet channel (5a) and a seed outlet channel (5b) for the selected seeds;
a sorter disc (30) fastened to said drum and having a series of through holes made at regular distances along a concentric circumference, said sorter disc and drum (7) defining a cavity being set in communication with said suction pipe (6) via said hollow hub;
a sorter plate (35) hinged to said bell-like holder and kept in contact, by means of first means, with said sorter disc in a region of this latter where said seeds arrive from said seed inlet channel, and designed to move one seed into each hole; a sector (60) fastened to said hub and carrying locking element for at least one pad fastened to said sector and located in said cavity downstream of said sorter plate (35), considering said rotation direction of said disc, said pad being kept in contact with said sorter disc (30) by second means, so that said pad closes some consecutive holes of said sorter disc when said holes are situated in the region of said seed outlet channel;
a stirrer (40) mounted in coaxial relation to said side of said sorter disc touched by said sorter plate;
a seed striker (57) located on said side of said sorter disc touched by said sorter plate (35) for striking each single seed at a point X crossed in succession by the holes of said disc to provoke a condition of unstable equilibrium for each seed in the region of this last point, so as to facilitate the detachment of said seed;
said seed delivering device being **characterised in that** said first means provided for keeping said sorter plate (35) in contact with said sorter disc (30) includes magnetic means.

2. Seed delivering device for a single-seed drill, of the type comprising:
a bell-like holder (406) fastened to the seed drill and featuring, in a central region, a hollow hub connected to a suction pipe (6) kept in negative pressure condition, and supporting a drum (7) rotatably mounted and driven into a rotation direction;
a cover (404) for closing the bell-like holder, said cover featuring a seed inlet channel (5a) and a seed outlet channel (5b) for the selected seeds;
a sorter disc (30) fastened to said drum and having a series of through holes made at regular distances along a concentric circumference, said sorter disc and drum (7) defining a cavity being set in communication with said suction pipe (6) via said hollow hub;
a sorter plate (35) hinged to said bell-like holder and kept in contact, by means of first means, with said sorter disc in a region of this latter where said seeds arrive from said seed inlet channel, and designed to move one seed into each hole; a sector (60) fastened to said hub and carrying locking element for at least one pad fastened to said sector and located in said cavity downstream of said sorter plate (35), considering said rotation direction of said disc, said pad being kept in contact with said sorter disc (30) by second means, so that said pad closes some consecutive holes of said sorter disc when said holes are situated in the region of said seed outlet channel;
a stirrer (40) mounted in coaxial relation to said side of said sorter disc touched by said sorter plate;
a seed striker (57) located on said side of said sorter disc touched by said sorter plate (35) for striking each single seed at a point X crossed in succession by the holes of said disc to provoke a condition of unstable equilibrium for each seed in the region of this last point, so as to facilitate the detachment of said seed;
said seed delivering device being **characterised in that** said second means, provided for keeping said pad in contact with said sorter disc, includes magnetic means.

3. Device as in claim 2, **characterised in that** it includes a second pad fastened to said sector, downstream of said first mentioned pad with respect to the rotation direction of said sorter disc (30), by locking means and kept in contact with said sorter disc by third means.

4. Device as in claim 3, **characterised in that** said third means, provided for keeping said second pad in contact with said sorter disc, includes magnetic means.

5. Device as in claim 1, in claim 2 or in claim 3, **characterised in that** said locking means (80) include two removal-preventing barb-like wings (80c,80d) made integral with said pad, with a stake, also made integral with said pad and situated between said wings, said stake being inserted into a hole made in said sector.

6. Device as in claim 1 or in claim 2, **characterised in that** said stirrer (40) is made in form of a disc and is equipped with fins (43) situated in an outmost part of said stirrer and inclined by 45° with respect to corresponding radial planes of said stirrer.

7. Device as in claim 1 or in claim 2, wherein bearings are mounted between said hub and said drum, **characterised in that** seal means (Z) are mounted between the head of said hub, facing said cavity, and the head of said sector, said seal means (z) being constrained to the hub.

## Patentansprüche

1. Vorrichtung zur Abgabe von Samen in einer Einzelkornsämaschine, mit:
einem glockenförmigen Halter (406), der an der Sämaschine befestigt ist und in einem zentralen Bereich eine hohle Nabe aufweist, die mit einem Saugrohr (6) verbunden ist, in dem ein negativer Druck herrscht, und die eine drehbar gelagerte und angetriebene Trommel (7) abstützt;
einem Deckel (404) zum Schließen des glockenförmigen Halters, welcher Deckel einen Sameneinlasskanal (5a) und einen Samenauslasskanal (5b) für die ausgewählten Samenkörner aufweist;
einer Sortierscheibe (30), die an der Trommel befestigt ist und eine Reihe von Durchgangslöchern in regelmäßigen Abständen längs eines konzentrischen Umfangs hat, wobei die Sortierscheibe und die Trommel (7) einen Hohlraum bilden, der mit dem Saugrohr (6) über die hohle Nabe in Verbindung steht;
einer Sortierplatte (35), die mit dem glockenförmigen Halter gelenkig verbunden ist und durch erste Mittel mit der Sortierscheibe in einem Bereich derselben, wo die Samen aus dem Sameneinlasskanal ankommen, in Berührung gehalten wird und die so ausgelegt ist, dass sie ein Samenkorn in jedes Loch bewegt; einem Sektor (60), der an der Nabe befestigt ist und ein Verriegelungselement für mindestens ein Kissen trägt, das an dem Sektor befestigt und in dem Hohlraum stromab der Sortierplatte (35) bezüglich der Drehrichtung der Sortierscheibe angeordnet ist, wobei das Kissen mit der Sortierscheibe (30) durch zweite Mittel in Kontakt gehalten wird, so dass das Kissen einige aufeinanderfolgende Löcher der Sortierscheibe verschließt, wenn die Löcher im Bereich des Samenauslasskanals angeordnet sind;
einem Rührer (40), der koaxial zu der betreffenden Seite der Sortierscheibe, welche von der Sortierplatte berührt wird, gelagert ist;
einem Samenschläger (57), der auf der von der Sortierplatte (35) berührten Seite der Sortierscheibe angeordnet ist, um jedes einzelne Samenkorn an einem Punkt X zu schlagen, die nacheinander von den Löchern der Scheibe gekreuzt werden, um Zustand eines instabilen Gleichgewichts für jedes Samenkorn in dem Bereich dieses letztgenannten Punktes zu erzeugen und dadurch das Lösen des Samenkorns zu erleichtern;
wobei die Samenabgabevorrichtung **dadurch gekennzeichnet ist, dass** die ersten Mittel, die die Sortierplatte (35) mit der Sortierscheibe (30) in Kontakt halten, magnetische Mittel umfassen.

2. Vorrichtung zur Abgabe von Samen in einer Einzelkornsämaschine, mit:
einem glockenförmigen Halter (406), der an der Sämaschine befestigt ist und in einem zentralen Bereich eine hohle Nabe aufweist, die mit einem Saugrohr (6) verbunden ist, in dem ein negativer Druck herrscht, und die eine drehbar gelagerte und angetriebene Trommel (7) abstützt;
einem Deckel (404) zum Schließen des glockenförmigen Halters, welcher Deckel einen Sameneinlasskanal (5a) und einen Samenauslasskanal (5b) für die ausgewählten Samenkörner aufweist;
einer Sortierscheibe (30), die an der Trommel befestigt ist und eine Reihe von Durchgangslöchern in regelmäßigen Abständen längs eines konzentrischen Umfangs hat, wobei die Sortierscheibe und die Trommel (7) einen Hohlraum bilden, der mit dem Saugrohr (6) über die hohle Nabe in Verbindung steht;
einer Sortierplatte (35), die mit dem glockenförmigen Halter gelenkig verbunden ist und durch erste Mittel mit der Sortierscheibe in einem Bereich derselben, wo die Samen aus dem Sameneinlasskanal ankommen, in Berührung gehalten wird und die so ausgelegt ist, dass sie ein Sämenkorn in jedes Loch bewegt; einem Sektor (60), der an der Nabe befestigt ist und ein Verriegelungselement für mindestens ein Kissen trägt, das an dem Sektor befestigt und in dem Hohlraum stromab der Sortierplatte (35) bezüglich der Drehrichtung der Sortierscheibe angeordnet ist, wobei das Kissen mit der Sortierscheibe (30) durch zweite Mittel in Kontakt gehalten wird, so dass das Kissen einige aufeinanderfolgende Löcher der Sortierscheibe verschließt, wenn die Löcher im Bereich des Samenauslasskanals angeordnet sind;
einem Rührer (40), der koaxial zu der betreffenden Seite der Sortierscheibe, welche von der Sortierplatte berührt wird, gelagert ist;
einem Samenschläger (57), der auf der von der Sortierplatte (35) berührten Seite der Sortierscheibe angeordnet ist, um jedes einzelne Samenkorn an einem Punkt X zu schlagen, die nacheinander von den Löchern der Scheibe gekreuzt werden, um einen Zustand eines instabilen Gleichgewichts für jedes Samenkorn in dem Bereich dieses letztgenannten Punktes zu erzeugen und dadurch das Lösen des Samenkorns zu erleichtern; wobei die Samenabgabevorrichtung **dadurch gekennzeichnet ist, dass** die zweiten Mittel, die das Kissen mit der Sortierscheibe in Kontakt halten, magnetische Mittel umfassen.

3. Vorrichtung nach Anspruch 2,**dadurch gekennzeichnet, dass** sie ein zweites Kissen umfasst, die an dem Sektor stromab des erstgenannten Kissens bezüglich der Drehrichtung der Sortierscheibe (30) durch Verriegelungsmittel befestigt ist und mit der Sortierscheibe durch dritte Mittel in Kontakt gehalten wird.

4. Vorrichtung nach Anspruch 3, dadurch gekennzeichne, t dass die dritten Mittel, die das zweite Kissen mit der Sortierscheibe in Kontakt halten, magnetische Mittel umfassen.

5. Vorrichtung nach Anspruch 1, 2 oder 3, **dadurch gekennzeichnet, dass** die Verriegelungsmittel (80) zwei mit dem Kissen einstückig ausgebildete, sichernde, hakenförmige Flügel (80c, 80d) umfassen, mit einern Zapfen, der ebenfalls einstückig mit dem Kissen ausgebildet und zwischen den Flügeln angeordnet ist, wobei der Zapfen in ein Loch des Sektors eingesetzt ist.

6. Vorrichtung nach Anspruch 1 oder 2, **dadurch gekennzeichnet, dass** der Rührer (40) die Form einer Scheibe hat und mit Rippen (43) versehen ist, die im äußersten Teil des Rührers angeordnet und um 45° bezüglich entsprechender radialer Ebenen des Rührers geneigt sind.

7. Vorrichtung nach Anspruch 1 oder 2, bei der Lager zwischen der Nabe und der Trommel angeordnet sind, **dadurch gekennzeichnet, dass** Dichtmittel (Z) zwischen dem dem Hohlraum zugewandten Kopf der Nabe und dem Kopf des Sektors angeordnet sind, wobei die Dichtmittel (Z) auf die Nabe beschränkt sind.

## Revendications

1. Dispositif pour la distribution de graines pour un semoir mono - graine, du type comprenant :
un support (406) en forme de cloche fixé au semoir de graines et comprenant, dans une région centrale, un moyeu creux relié à un tube d'aspiration (6) maintenu en condition de dépression, et supportant un tambour (7) monté rotatif et entraîné dans une direction de rotation ;
un capot (404) pour fermer le support en forme de cloche, ledit capot comprenant un canal d'entrée de graine (5a) et un canal de sortie de graine (5b) pour les graines sélectionnées ;
un disque de triage (30) fixé audit tambour et possédant une série d'orifices traversants disposés régulièrement le long d'une circonférence concentrique, ledit disque de triage et ledit tambour (7) définissant une cavité qui est mise en communication avec ledit tube d'aspiration (6) par l'intermédiaire dudit moyeu creux ;
une plaque de triage (35) articulée sur ledit support en forme de cloche et maintenue en contact, au moyen de premiers moyens, avec ledit disque de triage dans une région de ce dernier où lesdites graines arrivent dudit canal d'entrée de graine, et conçue pour déplacer une graine dans chaque orifice ; un secteur (60) fixé audit moyeu et supportant un élément de verrouillage pour au moins une plaquette fixée audit secteur et située dans ladite cavité en aval de ladite plaque de triage (35), en considérant ladite direction de rotation dudit disque, ladite plaquette étant maintenue en contact avec ledit disque de triage (30) par des deuxièmes moyens, de sorte que ladite plaquette obture des orifices consécutifs dudit disque de triage lorsque lesdits orifices sont situés dans la région dudit canal de sortie de graine ;
un agitateur (40) monté coaxialement du côté dudit disque de triage en contact avec ladite plaque de triage ;
un percuteur de graine (57) situé dudit côté dudit disque de triage en contact avec ladite plaque de triage (35) pour percuter chaque graine individuellement en un point X traversé successivement par les orifices dudit disque pour provoquer une condition d'équilibre instable pour chaque graine dans la région de ce dernier point, de façon à faciliter le détachement de ladite graine ;
ledit dispositif de distribution de graines étant **caractérisé en ce que** lesdits premiers moyens prévus pour maintenir ladite plaque de triage (35) en contact avec ledit disque de triage (30) comprennent des moyens magnétiques,

2. Dispositif de distribution de graines pour un semoir mono graine, du type comprenant un support (406) en forme de cloche fixée au semoir de graine et comprenant, dans une région centrale, un moyeux creux relié à au tube d'aspiration (6) maintenu en condition de dépression, et supportant un tambour (7) monté rotatif et entraîné dans une direction de rotation ;
un capot (404) pour fermer le support en forme de cloche, ledit capot comprenant un canal d'entrée de graine (5a) et un canal de sortie de graine (5b) pour les graines sélectionnées ;
un disque de triage (30) fixé audit tambour et possédant une série d'orifices traversants disposés régulièrement le long d'une circonférence concentrique, ledit disque de triage et ledit tambour (7) définissant une cavité qui est mise en communication avec ledit tube d'aspiration (6) par l'intermédiaire dudit moyeux creux ;
une plaque de triage (35) articulée sur ledit support en forme de cloche et maintenue en contact, au moyen des premiers moyens, avec ledit disque de triage dans une région de ce dernier où lesdites graines arrivent dudit canal d'entrée de graine, et conçue pour déplacer une graine dans chaque orifice ; un secteur (60) fixé audit moyeu et supportant un organe de verrouillage pour au moins une plaquette fixée audit secteur et située dans ladite cavité en aval de ladite plaque de triage (35), en considérant ladite direction de rotation dudit disque, ladite plaquette étant maintenue en contact avec ledit disque de triage (30) par des deuxièmes moyens, de sorte que ladite plaquette obture des orifices consécutifs dudit disque de triage lorsque lesdits orifices sont situés dans la région dudit canal de sortie de graine :
un agitateur (40) monté coaxiatement du côté dudit disque de triage en contact avec ladite plaque de triage ;
un percuteur de graine (57) situé dudit côté dudit disque de triage en contact avec ladite plaque de triage (35) pour percuter chaque graine individuellement en un point X traversé successivement par les orifices dudit disque pour provoquer une condition d'équilibre instable pour chaque graine dans la région de ce dernier point, de façon à faciliter le détachement de chaque graine ;
ledit dispositif de distribution de graines étant **caractérisé en ce que** lesdits deuxièmes moyens, prévus pour maintenir ladite plaquette en contact avec ledit disque de triage, comprennent des moyens magnétiques.

3. Dispositif suivant la revendication 2 **caractérisé en ce qu'**il comporte une deuxième plaquette fixée audit secteur, en aval de ladite première plaquette mentionnée par rapport à la direction de rotation dudit disque de triage (30), par des moyens de verrouillage et maintenue en contact avec ledit disque de triage par des troisièmes moyens.

4. Dispositif suivant la revendication 3 **caractérisé en ce que** lesdits troisièmes moyens, prévus pour maintenir ladite deuxième plaquette en contact avec ledit disque de triage, comprennent des moyens magnétiques.

5. Dispositif suivant la revendication 1, 2 ou 3, **caractérisé en ce que** lesdits moyens de verrouillage (80) comprennent deux ailes (80c, 80d) en forme d'ardillon empêchant un retrait, réalisé d'une pièce avec ladite plaquette, et une tige, également réalisée d'une pièce avec ladite plaquette et située entre lesdites ailes, ladite tige étant insérée dans un orifice pratiqué dans ledit secteur.

6. Dispositif suivant la revendication 1 ou 2 **caractérisé en ce que** ledit agitateur (40) est réalisé sous la forme d'un disque et est équipé d'ailettes (43) situées dans une partie la plus extérieure dudit agitateur et inclinés de 45° par rapport aux plans radiaux correspondants dudit agitateur.

7. Dispositif suivant la revendication 1 ou 2, dans lequel des paliers sont montés entre ledit moyeu et ledit tambour, **caractérisé en ce que** des moyens d'étanchéité (Z) sont montés entre la tête dudit moyeu, qui fait face à ladite cavité, et la tête dudit secteur, lesdits moyens d'étanchéité (Z) étant forcés sur le moyeu.
